# EUROPÄISCHE PATENTANMELDUNG

(11) **EP 1 226 791 A1**
(43) Veröffentlichungstag der Anmeldung: **31.07.2002**
(21) Anmeldenummer: 01810080.0
(22) Anmeldetag: 26.01.2001
(51) Int. Cl.: A61C 7/12, A61C 7/14, A61C 7/08

(54) **Vorrichtung für die Orthodontie**

(71) Anmelder: Schaulin AG, 3008 Bern (CH)
(72) Erfinder: Schaulin, Michael, 3097 Liebefeld (CH)
(74) Vertreter: Roshardt, Werner Alfred, Dipl.-Phys.

(57) **Zusammenfassung**

Die Erfindung betrifft eine Vorrichtung für die Orthodontie, in welcher ein Mittel zur Korrektur (24) in einem Anschlusselement (22) gehalten ist. Das Anschlusselement (22) seinerseits ist im Clip (65) befestigt. Der Clip (65) wird mit seiner Basis (66) direkt auf dem Zahn (20) aufgeklebt. Das Anschlusselement (22) ist entsprechend seiner Fixierungsaufgabe mit Öffnungen versehen, in welchen die Mittel zur Korrektur (24) befestigt sind. Das Anschlusselement (22) und das Mittel zur Korrektur (24) ist auswechselbar.

## Beschreibung

### Technisches Gebiet

Die Erfindung betrifft eine Vorrichtung für die Orthodontie mit zumindest einem Mittel zur Korrektur, einem Anschlusselement und einer Halterung.

### Stand der Technik

In der Kieferorthopädie werden einerseits abnehmbare und andererseits festsitzende Apparaturen eingesetzt. In der Orthodontie werden hauptsächlich festsitzende Apparaturen zum Korrigieren von Zahnfehlstellungen, beziehungsweise Gebissanomalien verwendet. Beispielsweise werden auf mehreren Zähnen so genannte Brackets befestigt und mittels Ligaturen mit einem Korrekturbogen verbunden. Eine auf diese Weise auf die Zähne ausgeübte Kraft führt über längere Zeit zu einer Verschiebung beziehungsweise Veränderung der Zahnstellung, sei es zur Verbesserung der Okklusion oder zur Verschönerung des Gebisses.

Die bei dieser Methode verwendeten Brackets sind im Prinzip kleine Plättchen, welche auf ihrer Oberseite Befestigungselemente aufweisen. Diese Befestigungselemente sind so platziert, dass ein horizontaler Schlitz frei bleibt, welcher einen Korrekturbogen aufnehmen kann. Um den Anforderungen an die hohe Präzision zu genügen, bestehen die Brackets meist aus Metall.

Die Verbindung zwischen dem Korrekturbogen und den Brackets wird durch die so genannte Ligatur geschaffen. Es handelt sich dabei z. B. um einen Metalldraht, welcher in geeigneter Weise um die Befestigungselemente der Brackets und den Korrekturbogen geschlungen wird, um eine feste Verbindung zwischen Bracket und Korrekturbogen zu schaffen, zur Übertragung der Kraft des Korrekturbogens auf das Bracket respektive auf den Zahn. Die US 5,044,945 (Peterson) zeigt in einer Variante dazu ein Bracket, bei welchem der zu fixierende Draht in einem Schlitz eingeklemmt wird.

In der US 3,438,132 (Rubin) wird ein zweiteiliges Bracket gezeigt, welches einen Clip und einen Block umfasst, welcher im Clip eingeschnappt wird. Der Block ist mit einem Schlitz versehen, in welchem der Korrekturbogen aufgenommen und arretiert wird. Durch die Ausgestaltung des Schlitzes im Block können verschiedene Korrekturen der Zahnfehlstellungen vorgenommen werden, wie beispielsweise Drehung um die vertikale Achse, Aufrichten oder Kippen und Verdrehen des Zahns.

Das Bracket, welches in der US 3,854,207 (Wildman) gezeigt ist, weist als eine Variante zu anderen bekannten Verfahren zwei oder mehr parallele Schlitze auf. Mit einem rechtwinklig zu den Schlitzen angeordneten U-förmigen Clip werden in den Schlitzen angeordnete Drähte fixiert.

Bei den bekannten Systemen handelt es sich um Speziallösungen, mit welchen meist nur eine oder eine beschränkte Anzahl von Korrekturen der Zahnfehlstellungen durchgeführt werden kann. Weiter müssen bei den bekannten Vorrichtungen die meisten Konstruktionen und Anpassungen durch einen Zahntechniker erstellt werden und können nur bei festsitzenden Apparaturen durch einen Zahnarzt selbst direkt am Patienten vorgenommen werden.

### Darstellung der Erfindung

Aufgabe der Erfindung ist es, eine Vorrichtung zu schaffen, welche modular aufgebaut ist und verschiedene Korrekturmöglichkeiten der Orthodontie ermöglicht, wobei die durch die Vorrichtung geschaffene Apparatur gegebenenfalls durch den Patienten herausnehmbar und wieder einsetzbar ist.

Die Lösung der Aufgabe ist durch die Merkmale des Anspruchs 1 definiert. Gemäss der Erfindung besteht die Vorrichtung aus zumindest einem Mittel zur Korrektur, einem Anschlusselement und einer Halterung. Das Mittel zur Korrektur ist am Anschlusselement gehalten. Das Anschlusselement seinerseits wird an der Halterung fixiert.

Durch diese Vorrichtung wird ein modulares System geschaffen, welches mit einzelnen verschiedenen Komponenten die meisten Anwendungen in der Orthodontie ermöglicht. Es handelt sich bei der erfindungsgemässen Vorrichtung um eine so genannte bedingt abnehmbare Apparatur. Bedingt abnehmbar bedeutet, dass sämtliche Mittel zur Korrektur angeordnet werden können, wie sie bei festsitzenden Apparaturen Anwendung finden, diese jedoch beispielsweise für die Reinigung entfernt und wieder eingesetzt werden können. Nicht nur der Zahnarzt, sondern auch der Patient kann, nach entsprechender Instruktion, die Vorrichtung selbst entfernen und wieder einsetzen. Somit kann das Mittel zur Korrektur und auch die durch dieses Mittel abgedeckte Zahnoberfläche zwischendurch gereinigt werden. Zahnschäden infolge mangelnder Möglichkeiten für eine Reinigung werden gegenüber den bisher verwendeten Vorrichtungen auf ein Minimum reduziert.

Die Halterung kann lateral (lingual/palatinal bzw. buccal) an jedem Zahn befestigt werden. Das Mittel zur Korrektur ist am Anschlusselement derart gehalten, dass es beispielsweise auch nach der Fixierung des Anschlusselements an der Halterung montiert werden kann. Bei einer nachträglichen Montage des Mittels zur Korrektur kann das Anschlusselement an der Halterung fixiert bleiben. Weiter ist ein beschädigtes Mittel zur Korrektur auswechselbar. Mit dieser erfindungsgemässen Vorrichtung ist beispielsweise auch eine stufenweise Korrektur der zu korrigierenden Zähne möglich. So kann das Mittel der Korrektur, beispielsweise ein Labialbogen, zu richtende Schneidezähne mit einer Kraft belasten, welche nur für einen Teil der Korrektur ausreicht. Ist dieser Zwischenschritt erreicht, wird der Labialbogen entfernt, nachgerichtet und wieder an den Anschlusselementen befestigt oder durch einen neuen, entsprechend der nun vorliegenden Zahnstellung angepassten Labialbogen ersetzt.

Vorzugsweise ist das Anschlusselement lösbar an der Halterung fixiert. So ist bei der Vorrichtung nicht nur das Mittel zur Korrektur, sondern auch das Anschlusselement bei Bedarf auswechselbar. Einerseits kann ein beschädigtes Anschlusselement ersetzt werden, ohne dass die ganze Vorrichtung ausgewechselt werden muss. Andererseits kann je nach Anwendung, beispielsweise wenn nach einer gewissen Zeit mehr als ein Mittel zur Korrektur an einem Anschlusselement gehalten wird, das entsprechend ausgebildete Anschlusselement eingesetzt werden.

In einer Variante dazu wird das Anschlusselement zwar in der Halterung eingeschnappt, aber die Verbindung kann nicht ohne eine Beschädigung der Halterung und/oder des Anschlusselements gelöst werden.

Vorzugsweise ist das Anschlusselement formschlüssig an der Halterung fixiert, wobei die Fixierung mit einer Klemmvorrichtung bevorzugt ist. Die formschlüssige Fixierung hat den Vorteil, dass sie mit einfachen Mitteln wieder gelöst werden kann. Beispielsweise ist das Anschlusselement in der Halterung eingeschnappt. Dazu wird das Anschlusselement in die Halterung hineingedrückt. Die Halterung weist einen Bereich im Querschnitt auf, welcher kleiner als die entsprechende Aussenabmessung des Anschlusselements ausgebildet ist. Sobald dieser Bereich bei der Montage des Anschlusselements überwunden wurde, ist das Anschlusselement fixiert. In einer Variante dazu, kann das Anschlusselement ein Spreizmittel, beispielsweise eine Schraube aufweisen. Nachdem das Anschlusselement in der Halterung eingesetzt ist, wird der Schraubenkopf betätigt. Die Schraube spreizt das Anschlusselement, wie bei einem Dübel, auseinander, worauf das Anschlusselement mit der Halterung verkeilt wird. Durch eine konische Ausbildung der Querschnittsform der Halterung kann die Wirkung der Klemmkraft und somit die Fixierung verstärkt werden.

Für die bevorzugte Art der Montage mit einem so genannten Einschnappmechanismus (engl.= snap-in mechanism) weist die Halterung einen U-förmigen Querschnitt auf und ist kanalförmig ausgebildet. Die Halterung umfasst eine Basis und zwei, gegenüberliegende Seitenwände, welche bevorzugt senkrecht zur Basis stehen. Diese Ausgestaltung der Halterung kann als Clip bezeichnet werden. Durch den U-förmige Querschnitt ist eine Aufnahme für das Anschlusselement geschaffen, in welcher das Anschlusselement fixiert werden kann. Die Seitenwände können auch gegeneinander geneigt angeordnet werden. Sie bilden mit der Basis in dieser Ausführungsvariante einen spitzen Winkel, d. h. einen Winkel < 90°. Das Anschlusselement weist vorzugsweise eine konische Form im Bereich auf, welcher in der Halterung eingesetzt wird, wodurch das Anschlusselement formschlüssig gehalten ist.

Bevorzugt wird die Halterung aus einem Werkstück hergestellt. Die Halterung kann auch aus Einzelteilen, beispielsweise einer separat hergestellten Basis und separat hergestellten Seitenwänden gefertigt werden. Die Einzelteile können miteinander verklebt, geschweisst oder gelötet sein. Mit einer Herstellung der Halterung aus Einzelteilen ist es möglich, auch verschiedene Materialien miteinander zu kombinieren und damit leichter spezielle Anforderungen (bspw. Ästhetik, besondere Funktionen, etc.) zu berücksichtigen.

In einer Variante zur U-förmigen Ausgestaltung der Halterung kann die Halterung nur eine Basis und einen Steg aufweisen. Der Steg steht bevorzugt senkrecht auf der Basis und ist beispielsweise in der Mitte der Querrichtung der Basis angeordnet. Vorzugsweise verläuft der Steg über die ganze Länge der Basis. Das Anschlusselement weist einen entsprechend des Querschnitts des Stegs ausgebildeten Schlitz auf. Das Anschlusselement kann mit einer oder mehreren senkrecht zum Schlitz verlaufenden Bohrungen versehen sein. Im Steg sind auch Bohrungen angeordnet, welche mit den Bohrungen des Anschlusselements übereinstimmen, wenn dieses an der Halterung aufgeschoben wird. Durch Stifte, Bolzen oder einem vergleichbaren Mittel kann das Anschlusselement an der Halterung fixiert werden.

Zur Verbesserung der formschlüssigen Verbindung zwischen der Halterung und dem Anschlusselement weist zumindest eine Seitenwand eine Ausbuchtung auf, welche mit einem entsprechend dieser Ausbuchtung ausgebildeten Mittel des Anschlusselements zusammenwirkt. Bevorzugt ist ein Vorsprung an der Seitenwand gegen die gegenüberliegende Seitenwand ausgerichtet und greift in eine Vertiefung am Anschlusselement ein. Vorzugsweise weisen beide Seitenwände jeweils gegeneinander gerichtete Vorsprünge auf. Besonders vorteilhaft ist es, wenn die Vorsprünge an den Seitenwände derart angeordnet sind, dass in diesem Bereich eine wesentliche Querschnittverjüngung der Halterung vorhanden ist. Das Anschlusselement weist vorzugsweise - insbesondere im Bereich, welcher in die Halterung eingesetzt wird - Aussenabmessungen auf, welche weitgehend den Innenabmessungen des Querschnitts der Halterung entsprechen. Das Anschlusselement ist mit Vertiefungen versehen, in welchen die Vorsprünge der Seitenwände eingreifen können. Wird nun das Anschlusselement in die Halterung eingesetzt, werden die Seitenwände infolge den Vorsprüngen auseinandergedrückt. Sobald die Vorsprünge mit den Vertiefungen lagenmässig übereinstimmen, schnappen die Vorsprünge in den Vertiefungen ein und halten das eingesetzte Anschlusselement formschlüssig.

Vorzugsweise verlaufen die Vorsprünge an den Seitenwänden über die ganze Länge der Halterung und an den Anschlusselementen werden entsprechend den Vorsprüngen über die ganze Länge des Anschlusselements Nuten angeordnet. Vorteilhaft weisen die VorSprünge an den Seitenwänden eine kreisbogenförmige, konvexe Ausgestaltung auf. Die Nuten am Anschlusselement haben entsprechend eine kreisbogenförmige, konkave Ausgestaltung. Der Vorsprung kann auch anders ausgestaltet sein, beispielsweise einen dreieckigen Querschnitt aufweisen. Die mit dem Vorsprung zusammenwirkende Nut weist vorteilhaft eine dem Vorsprung entsprechend ausgebildete Negativform auf. Die Vorsprünge können in einer Variante oder als Ergänzung zur bevorzugten Ausführungsform als Nocken ausgebildet sein, welche in entsprechend der Lage der Vorsprünge angeordneten, beispielsweise kegelförmigen Vertiefungen an den Anschlusselementen eingreifen.

Die Vorsprünge, beziehungsweise die Ausbuchtungen an den Seitenwänden können auch nach aussen gerichtet sein. Das Anschlusselement weist in einer solchen Ausführung entsprechend ausgebildete, konkave Vorsprünge auf. Auch hier werden die zusammenwirkenden Mittel vorzugsweise über die ganze Länge der Halterung beziehungsweise des Anschlusselements geführt. Weiter können die freien Enden der Seitenwände zum Querschnitt der Halterung hin umgebogen werden. Das Anschlusselement weist entsprechend bei dieser Ausführung komplementäre Vertiefungen auf. Entspricht die Höhe des Anschlusselements der Höhe der Seitenwände der Halterung, sind keine Vertiefungen am Anschlusselement nötig. Das Anschlusselement wird von den umgebogenen, freien Enden der Seitenwände umfasst und somit sicher gehalten.

Die Vorsprünge an den Seitenwänden der Halterung - oder am Anschlusselement - sind vorzugsweise aus dem gleichen Material wie die Halterung hergestellt und werden direkt beim Herstellungsprozess der Halterung ausgeformt. Sie können auch nachträglich an den Seitenwänden aufgeschweisst oder aufgelötet werden.

Die Halterung wird vorzugsweise durch spezielle Klebetechniken mit der Oberfläche des Zahnes verklebt. Die Halterung kann lingual, bzw. palatinal oder buccal am Zahn befestigt werden. Zur Befestigung wird eine Seite, vorzugsweise die Basis mit einem adhäsiven Mittel versehen und die Halterung wird direkt auf den Zahn geklebt. Im Handel sind unterschiedliche Mittel erhältlich, welche beispielsweise je nach Ort der Befestigung, Dauer der Befestigung und Art des Speichels entsprechende Eigenschaften aufweisen. Die Zahnoberfläche kann zur Erhöhung der adhäsiven Wirkung vorbehandelt werden, beispielsweise mit der Säure-Ätz-Technik (SÄT). Mit den heute auf dem Markt erhältlichen Klebemittel kann die sichere Befestigung der Halterungen an den Zähnen gewährleistet und bleibende Verfärbungen an der Zahnoberfläche weitgehend vermieden werden.

In einer Variante wird die Halterung nicht direkt auf dem Zahn, sondern an einem so genannten Zahnband angeordnet. Dieses wird in der bekannten Art montiert. Das Zahnband kann auf einzelnen oder allen Zähnen angebracht werden. Die Halterung wird auf das Zahnband aufgeklebt oder je nach Material der Halterung und des Zahnbands auf diesem aufgelötet, beziehungsweise aufgeschweisst.

Infolge dem Einsatzgebiet der erfindungsgemässen Vorrichtung in der Orthodontie weisen die Bestandteile der Vorrichtungen nur geringe Abmessungen, meistens im Milimeterbereich auf. Damit die Kontaktfläche zwischen der Halterung und dem Zahn, beziehungsweise dem Zahnband vergrössert wird, sind beispielsweise an der Basis Laschen angeordnet. Durch die so geschaffene grössere Kontaktfläche ist die Übertragung grösserer Kräfte möglich, als dies mit einer kleineren, nur auf die Grundfläche der Basis beschränkten Kontaktfläche möglich ist. Bei geringen Belastungen auf die Halterung, kann beispielsweise auch die Grundfläche der Basis - d. h. die Grundfläche ohne zusätzliche Anordnung von Laschen - als Kontaktfläche für eine sichere Befestigung ausreichend sein.

Die Laschen sind vorzugsweise in Längsrichtung der Halterung angeordnet. Wenn die Aufnahme für das Anschlusselement okklusal ausgerichtet sein soll, wird die Halterung vorzugsweise mit einer Seitenwand am Zahn, beziehungsweise am Zahnband befestigt. Bei einer solchen Anordnung der Halterung werden angeordnete Laschen an der Seitenwand vorgesehen, welche zur Befestigung vorgesehen ist. Diese Laschen werden vorzugsweise auch für die entsprechende Seitenwand in Längsrichtung der Halterung vorgesehen. Durch die okklusale Ausrichtung der Aufnahme der Halterung kann das Anschlusselement von oben - bei einer Befestigung an den Zähnen des Unterkiefers -, beziehungsweise von unten - bei einer Befestigung an den Zähnen des Oberkiefers - eingesetzt werden.

Vorzugsweise werden an der Basis der Halterung zwei Hakenteile angeordnet, an welchen beispielsweise eine Verschnürung angebracht werden kann. Die Hakenteile sind bevorzugt an den Längsenden der Basis angeordnet und stehen senkrecht zur Basis. Die Höhe des Hakenteils ist vorzugsweise kleiner oder gleich der Höhe der Seitenwände, bezogen auf die Basis. Dadurch ist eine flexible Verwendung der Halterung gegeben. In der bevorzugten Ausführungsform ist die Hakenform jeweils nach aussen gebogen und die Abrundung entspricht einem Halbkreis (etwa 180°). Das freie Ende des Hakens kann in Richtung des Zahns verlängert sein, womit eine sichere Befestigung beispielsweise einer Verschnürung gewährleistet wird. Trotz der Anordnung von Hakenteilen kann das Anschlusselement in der Halterung eingesetzt und fixiert werden. Wird die Anzahl der Hakenteile beispielsweise auf vier erhöht, kann an dieser Halterung mit einer Ligatur oder Ähnlichem in bekannter Art und Weise ein Mittel zur Korrektur befestigt werden.

In einer bevorzugten Ausführung der Halterung mit einer Kombination von Laschen (zur Vergrösserung der Kontaktfläche zwischen der Halterung und einem Zahn), sowie zwei Hakenteilen, werden die Hakenteile jeweils in der Mitte am freien Rand der Basis angeordnet. Die Breite der Hakenteile beträgt etwa ein Drittel der gesamten Breite der Basis, wobei sich die Grössenangaben auf den Querschnitt der Halterung beziehen. Links und rechts - bezogen auf den Querschnitt der Halterung - des Hakenteils sind jeweils zwei Laschen in der Verlängerung der Längsrichtung der Basis angeordnet.

Als Ausgangsmaterial für die Bestandteile der erfindungsgemässen Vorrichtung, insbesondere für die Halterung, das Anschlusselement und zumindest den Befestigungsteil des Mittels zur Korrektur wird vorzugsweise ein korrosionsstabiles und bioverträgliches Metall verwendet. Metall hat den Vorteil, dass es insbesondere im Zusammenwirken der Halterung und des Anschlusselements positive Auswirkungen hat. Beispielsweise können die Seitenwände der Halterung an ihren freien Rändern gegeneinander zusammengedrückt werden, wodurch eine Vorspannung der Halterung erzeugt und die Wirkung des Einschnappmechanismus verstärkt wird. Andererseits kann die bevorzugte Ausführungsform der Halterung aus einem Werkstück hergestellt werden, wenn Metall - beispielsweise Blech - als Ausgangsmaterial verwendet wird. Weiter sind beispielsweise für die Verbindung von Metall am Zahn verschiedene Klebetechniken bekannt und erprobt, welche eine sichere und für die Behandlungsdauer genügend starke Verbindung zwischen der Halterung und dem Zahn gewährleisten. Die Halterung kann auch aus nichtmetallischen Materialien hergestellt werden, wie beispielsweise Kunststoff oder Keramik.

Das Anschlusselement kann wie die Halterung aus Metall hergestellt werden. Dies ist vorteilhaft, wenn die Vorsprünge am Anschlusselement angeordnet sind. Aus ästhetischen Gründen kann beispielsweise Keramik als Ausgangsmaterial verwendet werden, da Keramik farblich leicht an die natürliche Zahnfarbe, insbesondere der benachbarten Zähne angepasst werden kann. Weiter ist die Verwendung von Kunststoff auch für das Anschlusselement möglich. Die Materialwahl ist durch das Zusammenwirken zwischen der Halterung und dem Anschlusselement bedingt. Einerseits soll die Verbindung formschlüssig sein und andererseits muss eine Montage des Anschlusselements in der Halterung noch möglich sein.

Die Materialwahl des Mittels zur Korrektur ist von der Funktion dieses Mittels abhängig. Je nach Anwendung können verschiedene Materialien verwendet werden. Korrekturbögen, beispielsweise ein Labialbogen, werden vorzugsweise aus einem Draht gebogen.

Vorzugsweise ist das Anschlusselement mit Öffnungen versehen, in welchen die Mittel zur Korrektur, beispielsweise ein Draht, befestigt werden. Bevorzugt werden die Öffnungen in den Anschlusselementen mit Bohrungen erstellt. Deren Durchmesser entsprechen bevorzugt dem Aussendurchmesser des zu befestigenden Mittels. Werden mehr als zwei Mittel zur Korrektur an einem Anschlusselement befestigt, werden entsprechend der Anzahl der zu befestigenden Mittel die Anzahl von Bohrungen erstellt. Die Bohrungen können auch unterschiedliche Durchmesser aufweisen, wobei der Durchmesser in Abhängigkeit des Aussendurchmessers des zu befestigenden Mittels bestimmt wird, beispielsweise eines Drahtes. Die Öffnungen im Anschlusselement können auch ausgestanzt werden. Neben einem kreisförmigen Querschnitt können die Öffnungen auch quadratisch, rechteckig oder mehreckig ausgestaltet werden.

Soll beispielsweise ein gebogener Draht am Anschlusselement gehalten werden, wird das Anschlusselement mit einem Schlitz versehen. Der Schlitz ist vorzugsweise an seinen freien Enden im Querschnitt des Schlitzes verjüngt ausgebildet. Dadurch kann der zu befestigende Draht im Anschlusselement eingeschnappt werden.

An der erfindungsgemässen Vorrichtung lassen sich weitgehend alle in der Orthodontie angewendeten Mittel zur Korrektur von Gebissanomalien befestigen. Die Mittel zur Korrektur sind beispielsweise Labialbögen, okklusale, lingual/palatinal, buccale angeordnete Aufbisse, Lingual-/Sublingual- oder Transversalbügel, Konstruktionen im Zusammenhang mit einem Headgear (Kopf-Kinn-Kappe), Platz-/Lückenhalter (bspw. bei Zahnlücken nach einem frühzeitigen Milchzahnverlust), Verschnürungen (bspw. die Multibandtechnik). Weiter können an der erfindungsgemässen Vorrichtung auch so genannte Teilprothesen (bspw. abgestützte Prothesen, Schaltprothesen, Freiendprothesen) und Brücken befestigt werden.

Der bevorzugt ausgebildete Aufbiss umfasst zumindest zwei Schichten. Eine erste Schicht - die so genannte Tragschicht - ist beispielsweise mit einer Öffnung versehen, vorzugsweise einer Bohrung. In der Öffnung wird beispielsweise ein Draht hindurchgeführt, welcher den Aufbiss am gewünschten Ort im Mund des Patienten fixiert. Zumindest eine zweite Schicht ist auf dieser Tragschicht angeordnet. Diese Schicht ist leicht verformbar. Der Aufbiss wird im Mund des Patienten eingesetzt und am Einsatzort angepasst. Anschliessend wird der angepasste Aufbiss aus dem Mund des Patienten entfernt und endgültig gehärtet. Vorstehendes, ausgequelltes Material und allfällig nicht benötigte Abschnitte der Tragschicht werden entfernt, beispielsweise abgeschnitten, und der Aufbiss wird im Mund des Patienten definitiv mit der erfindungsgemässen Vorrichtung am richtigen Ort fixiert. Ein Aufbiss muss genau auf den Ort angepasst werden, an welchem der Aufbiss angeordnet wird, da sonst Druckstellen oder Verletzungen auftreten, insbesondere bei einer buccalen Anordnung des Aufbisses. Durch den erfindungsgemässen Aufbiss kann auf eine Herstellung eines Modells zur Herstellung des Aufbisses verzichtet werden.

Geeignete Materialien für die Herstellung eines erfindungsgemässen Aufbisses sind Kunststoffe, welche die gewünschten Anforderungen erfüllen. Das Material für die Tragschicht muss vor dem Anpassen des Aufbisses komplett ausgehärtet sein. Neben harten Kunststoffen kommt für die Tragschicht auch ein weicher Kunststoff in Frage, wobei die damit verbundene Verformbarkeit sich nicht nachteilig auf die Positionierung des Aufbisses im Mund des Patienten auswirken darf. Die verformbare Schicht wird beispielsweise aus einem zur Aushärtung durch Lichtpolymerisation geeigneten Kunststoff hergestellt. Die zweite Schicht des im Mund des Patienten geformten Aufbisses wird durch eine spezielle Lichtquelle (bspw. einer Halogenglühlampe) in kurzer Zeit gehärtet. Die Schichtdicke der verformbaren Schicht beträgt je nach Anwendung nur wenige Millimeter. Bei einer Härtung des geformten Aufbisses mittels Lichtpolymerisation kann nur eine begrenzte Schichtdicke ausgehärtet werden. Je nach Anwendung können deshalb auch mehrere verformbare Schichten auf der Tragschicht angeordnet werden, wobei die Schicht zwischen der verformbaren Schicht und der Tragschicht beispielsweise als Unterfütterung dienen kann.

Bei dem Aufbiss handelt es sich vorzugsweise um ein so genanntes Halbfabrikat, bevorzugt aus Kunststoff hergestellt. Der Aufbiss muss mit einfachen Mitteln, beispielsweise einem Messer, angepasst werden können. Entsprechend dem vorgesehenen Einsatzort werden die Aufbisse als so genannte Standardprodukte vorfabriziert. Beispielsweise reicht ein vorfabrizierter Typ eines Aufbisse lingual beziehungsweise palatinal vom rechten bis zum linken Caninus. Soll dieser Aufbiss nur die Incisivi abdecken, kann der Aufbiss beispielsweise auf diese Grösse zurecht geschnitten werden. Aufbisse können auch okklusal angeordnet sein. Beispielsweise wird ein Typ eines Aufbisses vorfabriziert, welcher die Molaren und den ersten, an die Molaren benachbarten Prämolar bedeckt. Soll der Aufbiss nur die Molaren abdecken, wird der nicht benötigte Teil des Aufbisses abgeschnitten, welcher den Prämolar bedecken würde. Der Typ des okklusal angeordneten Aufbisses wird vorzugsweise in wenigen Standardbreiten, beispielsweise in einer Breite für Zähne von Kindern, Jugendlichen und Erwachsenen hergestellt. Ein allfälliger seitlicher Überstand kann problemlos entfernt werden. So können für die häufigsten Anwendungen der Aufbisse entsprechende Halbfabrikate hergestellt werden. Dies führt einerseits durch die hohen Stückzahlen und andererseits durch die Reduktion des Arbeitsaufwandes zu massgeblich tieferen Kosten.

Vorzugsweise wird für die Palatinal- und Lingualbögen ein so genannter Thermodraht verwendet. Der Thermodraht wird durch den Zahntechniker, gegebenenfalls auch durch den Zahnarzt, gemäss der Art des Einsatzes geformt und beispielsweise elektrothermisch aufgeheizt. Nach der Abkühlung kehrt der Thermodraht immer in die Form zurück, welche vor dem Aufheizen ausgebildet wurde. Der Draht kann beispielsweise gebogen oder gefaltet werden, ohne das die ursprünglich geformte Ausgestaltung ändert.

Insbesondere wenn der Patient instruiert wurde, die Vorrichtung selbst zu entfernen, zu reinigen und wieder einzusetzen, ist die Verwendung eines Thermodrahtes zumindest für die Palatinal- und Lingualbögen vorteilhaft. Selbst bei einem unsachgemässen Umgang mit der Vorrichtung bleibt die Form weitgehend erhalten. Der Thermodraht hält auch über längere Zeit die durch die Ausformung des Thermodrahts erzeugte Spannung bei.

In einer besonderen Ausführung bei der Verwendung des Thermodrahts wird ein Setup erstellt und der Thermodraht in diesem angepasst. Ein Setup ist ein Modell eines Unteroder eines Oberkiefers eines Patienten, bei welchem die Zahnstellung bereits korrigiert wurde. Anhand dieses Models werden die Mittel zur Korrektur ausgeformt, beispielsweise der Palatinal- und Lingualbögen. Anschliessend werden die Mittel zur Korrektur im Anschlusselement eingesetzt und am unkorrigierten Gebiss des Patienten durch den Zahnarzt vorzugsweise mit der erfindungsgemässen Vorrichtung befestigt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Einen Querschnitt durch eine Halterung der erfindungsgemässen Vorrichtung;
- Fig. 2: eine Seitenansicht einer Halterung der erfindungsgemässen Vorrichtung;
- Fig. 3a-c: jeweils eine Draufsicht auf beispielhafte Anschlusselemente der erfindungsgemässen Vorrichtung;
- Fig. 4: einen Querschnitt durch eine Halterung der erfindungsgemässen Vorrichtung mit einer okklusalen Aufnahme;
- Fig. 5: eine Seitenansicht einer Halterung der erfindungsgemässen Vorrichtung;
- Fig. 6: einen Querschnitt durch eine Variante der Halterung der erfindungsgemässen Vorrichtung;
- Fig. 7: eine Ansicht eines Zahns mit einer aufgeklebten Halterung der erfindungsgemässen Vorrichtung;
- Fig. 8: eine Draufsicht auf einen Unterkiefer mit einem seitlichen Aufbiss an den Incisivi;
- Fig. 9: einen Querschnitt durch einen Incisivus entlang der Schnittlinie A-A;
- Fig. 10: eine perspektivische Draufsicht auf einen Oberkiefer mit zwei okklusal angeordneten Aufbissen auf den Molaren und den hintersten Prämolaren;
- Fig. 11: eine Ansicht eines Zahns mit der erfindungsgemässen Vorrichtung in Funktion eines Aufbisses;
- Fig. 12: eine Ansicht eines Zahns mit der erfindungsgemässen Vorrichtung in Funktion eines Brackets und
- Fig. 13a-e: eine Draufsicht auf einen Kiefer mit verschiedenen Anwendungsbeispielen der erfindungsgemässen Vorrichtung.

Grundsätzlich sind in den Figuren gleiche Teile mit gleichen Bezugszeichen versehen.

### Wege zur Ausführung der Erfindung

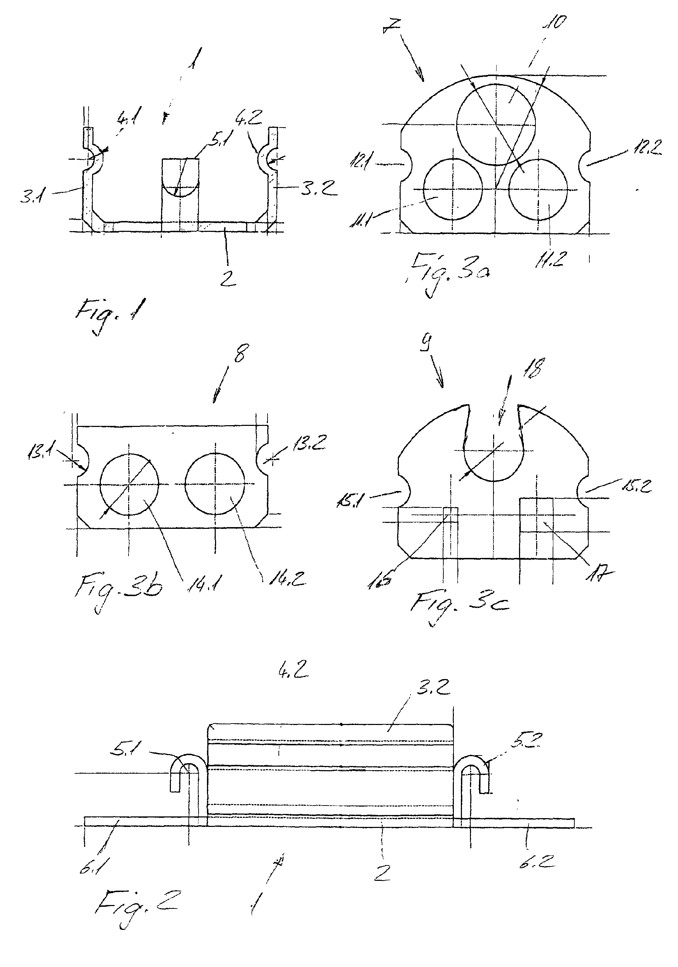

Figur 1 zeigt einen Querschnitt durch eine Halterung der erfindungsgemässen Vorrichtung. Die Halterung, nachfolgend Clip 1 genannt, wird vorzugsweise aus korrosionsbeständigem Metall hergestellt. Als Variante dazu kann der Clip 1 auch aus Keramik, Kunststoff oder einem anderen korrosionsstabilen und bioverträglichen Material hergestellt werden. Der Clip 1 hat vorzugsweise einen rechteckigen Querschnitt und ist kanalförmig ausgebildet. Er umfasst eine Basis 2 und zwei Seitenwände 3.1 und 3.2. Die Seitenwände 3.1 und 3.2 haben nach innen, d. h. zum Querschnitt ausgerichtete, und bevorzugt über die ganze Länge der Seitenwände 3.1 und 3.2 verlaufende Vorsprünge 4.1 bzw. 4.2. Vorzugsweise sind die Vorsprünge 4.1 und 4.2 aus dem Grundmaterial des Clips 1 geformt und weisen bevorzugt eine kreisbogenförmige Ausgestaltung auf. Die Vorsprünge 4.1 und 4.2 können auch auf die Seitenwände 3.1 und 3.2 aufgebracht werden, beispielsweise aufgeschweisst oder aufgelötet. Weiter können die Vorsprünge 4.1 und 4.2 auch eine andere, beispielsweise eine dreieckige Ausgestaltung aufweisen. Durch die Vorsprünge 4.1 und 4.2 wird das eingesetzte Anschlusselement, wie nachfolgend noch im Detail beschrieben wird, im eingeschnappten Zustand gehalten. Am Clip 1 sind zusätzlich noch zwei Halteteile angeordnet. In der Figur 1 ist nur das Halteteil 5.1 dargestellt. An den Halteteilen kann beispielsweise eine Ligatur oder ein Multiband befestigt werden.

Eine Seitenansicht einer Halterung der erfindungsgemässen Vorrichtung ist in Figur 2 dargestellt. In dieser Ansicht ist der Vorsprung 4.2 von der Seitenwand 3.2 her gesehen konvex ausgebildet. Die Halteteile 5.1 und 5.2 sind an ihren freien Enden hakenförmig bevorzugt in Richtung der Basis 2 abgebogen. Der hier gezeigte Clip 1 ist derart ausgebildet, dass die Basis 2 lateral (beispielsweise lingual bzw. palatinal oder buccal am Zahn befestigt wird. Die Basis 2 weist Laschen 6.1 und 6.2 auf, welche die Kontaktfläche zwischen dem Zahn und der Halterung vergrössern und somit eine verbesserte und damit eine längere Haftung des Clips 1 am Zahn gewährleisten. Die Befestigung des Clips 1 am Zahn erfolgt vorzugsweise mit einer geeigneten Klebetechnik. Neben dieser bevorzugten Variante der Befestigung kann der Clip 1 auch an einem Zahnband aufgelötet oder aufgeschweisst sein. Bevorzugt wird der Clip 1 aus einem Werkstück hergestellt. Es kann jedoch auch aus mehreren Einzelteilen, gegebenenfalls mit Einzelteilen aus unterschiedlichen Materialien, beispielsweise durch Löten oder Schweissen zusammengesetzt sein.

Die Figuren 3a, 3b und 3c zeigen jeweils eine Draufsicht auf beispielhafte Anschlusselemente der erfindungsgemässen Vorrichtung. Die Anschlusselemente 7, 8 und 9 sind bevorzugt aus einem Block hergestellt und weisen vorzugsweise eine quaderförmige Ausgestaltung auf. Die Anschlusselemente 7, 8 und 9 haben in Längsrichtung an zwei Seiten eine Nut ausgebildet, welche komplementär mit den Vorsprüngen 4.1 und 4.2 ausgebildet ist. Die Vorsprünge 4.1 und 4.2 sowie die Nuten bilden zusammen den Einschnappmechanismus. Das Anschlusselement, beispielsweise das Anschlusselement 7, wird in den Clip 1 hineingedrückt, bis der Vorsprung 4.1 bzw. 4.2 in der entsprechenden Nut einschnappt. Durch den Einschnappmechanismus und der Klemmwirkung der Seitenwände 3.1 und 3.2 wird das Anschlusselement an der Halterung sicher gehalten. Das Anschlusselement kann vor dem Montieren bereits mit dem zu haltenden Mittel zur Korrektur versehen sein. Weiter kann das eigentliche Korrekturmittel auch nach dem Montieren des Anschlusselements in diesem befestigt werden.

Die nachfolgenden Massangaben beziehen sich auf beispielhafte Ausführungen der erfindungsgemässen Vorrichtung. Je nach Art des Zahns, beispielsweise bei einer Befestigung auf einem Molar, Prämolar, Caninus oder Incisivus, variieren die Abmessungen, insbesondere die Länge, des Befestigungs- und des Anschlusselements.

In Figur 3a ist ein Anschlusselement 7 mit drei Bohrungen 10, 11.1 und 11.2 dargestellt. An zwei Seiten sind die vorzugsweise über die ganze Länge des Anschlusselements 7 verlaufenden Nuten 12.1 und 12.2 angeordnet, welche in den Dimensionen komplementär zu den Vorsprüngen 4.1 bzw. 4.2 des entsprechenden Clips 1 ausgebildet sind. Die Bohrung 10 ist in ihrem Durchmesser grösser als die Bohrungen 11.1 und 11.2 ausgebildet. Im vorliegenden Beispiel sind die Bohrungen 11.1 und 11.2 gleich gross ausgebildet. Durch die Anordnung mehrerer Bohrungen 10, 11.1 und 11.2 können an diesem Anschlusselement 7 beispielsweise drei Drähte befestigt werden. Die Grösse des Durchmessers der jeweiligen Bohrung 10, 11.1 und 11.2 wird entsprechend dem verwendeten Aussendurchmesser und der Form des zu befestigten Drahtes, beispielsweise eines Korrekturbogens, ausgebildet.

Die Hauptabmessungen des Anschlusselements 7 betragen in diesem Beispiel etwa 3 mm für die Breite, etwa 2.5 mm für die Höhe und etwa 4 mm für die Länge. Der kanalförmige Querschnitt des zugehörigen Clips 1 weist im Wesentlichen die gleichen Innenabmessungen wie die Aussenabmessungen des Anschlusselements 7 auf. Die Innenabmessung des Clips 1 beträgt in der Höhe etwa 1.5 mm, weshalb beim vorliegenden Anschlusselement 7 ein Teil des Anschlusselements 7 über den Clip 1 vorsteht. Damit keine Verletzungen des benachbarten Gewebes, insbesondere bei einer lateralen Befestigung der Vorrichtung am Zahn, entstehen, wird der vorstehende Teil des Anschlusselements 7 vorzugsweise abgerundet.

Figur 3b zeigt im Gegensatz zu Figur 3a ein Anschlusselement 8, welches wie das Anschlusselement 7 Nuten 13.1 und 13.2 aufweist, aber in den Aussenabmessungen den Innenabmessungen des Clips 1 entspricht. Die Höhe des Anschlusselements 8 beträgt etwa 1.5 mm. Damit schliesst das Anschlusselement 8 bündig mit der freien Kante der Seitenwände 3.1 bzw. 3.2 des Clips 1 ab. Das Anschlusselement 8 ist mit zwei Bohrungen 14.1 und 14.2 - hier mit gleichem Durchmesser - versehen, welche den zu befestigenden Korrekturbogen aufnehmen. Die Befestigung des Anschlusselements 8 erfolgt in der gleichen Weise, wie es beim Anschlusselement 7 beschrieben wurde.

Eine weitere Variante eines Anschlusselements ist in Figur 3c dargestellt. Die Hauptabmessungen des Anschlusselements 9 entsprechen weitgehend den Hauptabmessungen des Anschlusselements 7. Damit das Anschlusselement 9 im Clip 1 einschnappen kann, sind auch hier komplementär zu den Vorsprüngen 4.1 und 4.2 des Clips 1 ausgebildete, vorzugsweise über die ganze Länge verlaufende Nuten 15.1 und 15.2 angeordnet. Zum Schutz vor Verletzungen des zu der Vorrichtung benachbarten Bereichs, beispielsweise bei einer lateralen Befestigung der Halterung, ist der über den Clip 1 vorstehende Teil des Anschlusselements 8 abgerundet. Die Bohrungen 16 und 17 haben einen rechteckigen, in diesem Beispiel einen unterschiedlich grossen, quadratischen Querschnitt. Weiter ist ein über die ganze Länge verlaufender Schlitz 18 angeordnet, welcher beispielsweise einen Draht eines Korrekturbogens aufnehmen kann. Der Querschnitt des Schlitzes 18 ist vorzugsweise gegen die offene Seite des Schlitzes leicht verjüngt, wodurch der zu befestigende Korrekturbogen in einer bevorzugten Weise gehalten beziehungsweise eingeklemmt wird. Der Korrekturbogen kann auch beispielsweise mit einer Ligatur oder einem Keil am Anschlusselement 9 fixiert werden.

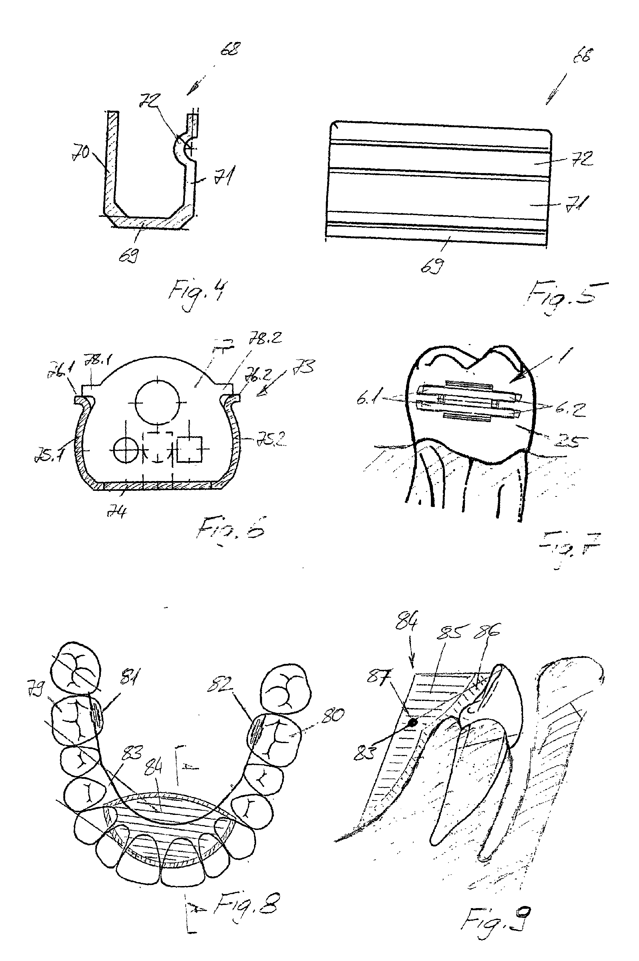

Figur 4 zeigt einen Querschnitt durch eine Halterung der erfindungsgemässen Vorrichtung mit einer okklusalen Aufnahme. Der Clip 68 umfasst eine Basis 69, eine Seitenwand 70 und eine Seitenwand 71. Zur Schaffung eines Einschnappmechanismus weist die Seitenwand 71 einen Vorsprung 72 auf. Der Vorsprung 72 ist vorzugsweise in der gleichen Art wie die Vorsprünge 4.1 und 4.2 des Clips 1 ausgebildet. Da der Clip 68 mit der Seitenwand 70 am Zahn befestigt wird, entsteht eine okklusale Ausrichtung der Aufnahme des Clips 68 und ein Anschlusselement kann von oben eingesetzt werden. Um eine grösstmögliche Kontaktfläche zwischen dem Clip 68 und der Zahnoberfläche zu schaffen, weist die Seitenwand 70 keinen Vorsprung auf. Der Clip 68 kann in einer Variante derart am Zahn befestigt werden, dass ein Anschlusselement von unten eingesetzt werden kann. Die Seitenwand 70 kann wie die Basis 2 Laschen aufweisen, welche die Kontaktfläche zwischen dem Zahn und dem Clip 69 vergrössern.

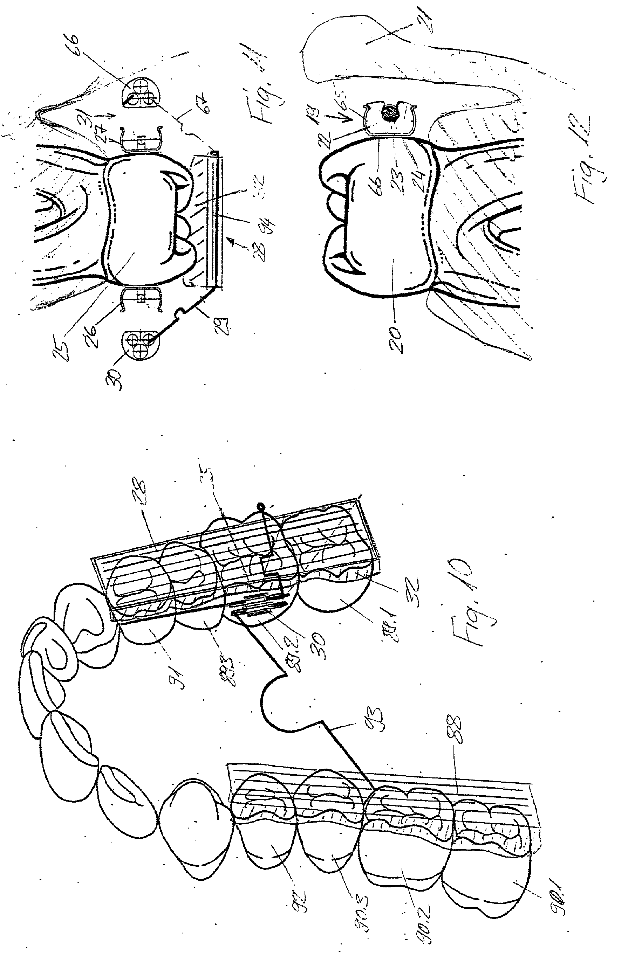

Eine Seitenansicht einer Halterung der erfindungsgemässen Vorrichtung ist in Figur 5 dargestellt. In dieser Ansicht ist der Vorsprung 72 von der Seitenwand 71 her gesehen konvex ausgebildet. Bei einer derartigen Befestigung des Clips 68, bei der eine okklusale Ausrichtung der Aufnahme geschaffen wird, sind vorzugsweise keine Halteteile an der Basis 69 angeordnet. Weiter ist bei den im Normalfall vorhandenen Belastungen auf den Clip 68 die Anordnung von Laschen nicht notwendig. Werden Laschen benötigt, dann werden diese bei der vorliegenden Ausgestaltung der erfindungsgemässen Vorrichtung in Längsrichtung der Seitenwand 70 angeordnet. Die Befestigung des Clips 68 am Zahn erfolgt vorzugsweise mit einer geeigneten Klebetechnik. Der Clip 68 kann auch an einem Zahnband aufgelötet oder aufgeschweisst sein. Wie der Clip 1 wird der Clip 68 bevorzugt aus einem Werkstück hergestellt.

Figur 6 stellt einen Querschnitt durch eine Variante der Halterung der erfindungsgemässen Vorrichtung dar. Wie bei den bisher beschriebenen Clips umfasst Clip 73 eine Basis 74 und zwei Seitenwände 75.1 und 75.2. Bei dieser Ausführungsform sind die Seitenwände 75.1 und 75.2 auf den Querschnitt gesehen nach aussen gewölbt. Die freien Enden 76.1 und 76.2 sind nach aussen abgebogen. Das Anschlusselement 77 ist entsprechend dem Clip 73 ausgebildet und weist gemäss den zu befestigenden Mitteln zur Korrektur ausgebildete Öffnungen auf. Das Anschlusselement bildet mit Vorsprüngen 78.1 und 78.2 die zur bevorzugten Art der Fixierung benötigte Nuten am Anschlusselement 77. Diese Vorsprünge 78.1 und 78.2 können über die Länge der umgebogenen freien Enden 76.1 und 76.2 hinaus verlängert werden. Dadurch wird eine Abdeckung des meistens aus Metall hergestellten Clips 73 geschaffen, welche ästhetisch vorteilhaft ist. Vorzugsweise wird das Anschlusselement 77 aus einem zahnfarbenen Material hergestellt.

Eine Ansicht eines Zahns mit einer aufgeklebten Halterung der erfindungsgemässen Vorrichtung ist in Figur 7 gezeigt. Der Clip 1 - hier in einer Draufsicht dargestellt - ist beispielsweise auf einem Molar 25 lateral aufgeklebt. Der dargestellte Clip 1 weist zur Vergrösserung der Kontaktfläche zwischen dem Clip 1 und dem Molar 25 an der Basis angeordnete Laschen 6.1 und 6.2 auf.

In Figur 8 ist eine Draufsicht auf einen Unterkiefer mit einem seitlichen Aufbiss gezeigt, welcher an den Incisivi angeordnet ist. An den Molaren 79 und 80 sind jeweils lingual die Vorrichtungen 81 und 82 aufgeklebt. Die Anschlusselemente der Vorrichtungen 81 und 82 fixieren den Draht 83, welcher den seitlich an den Incisivi angeordneten Aufbiss 84 in Position hält.

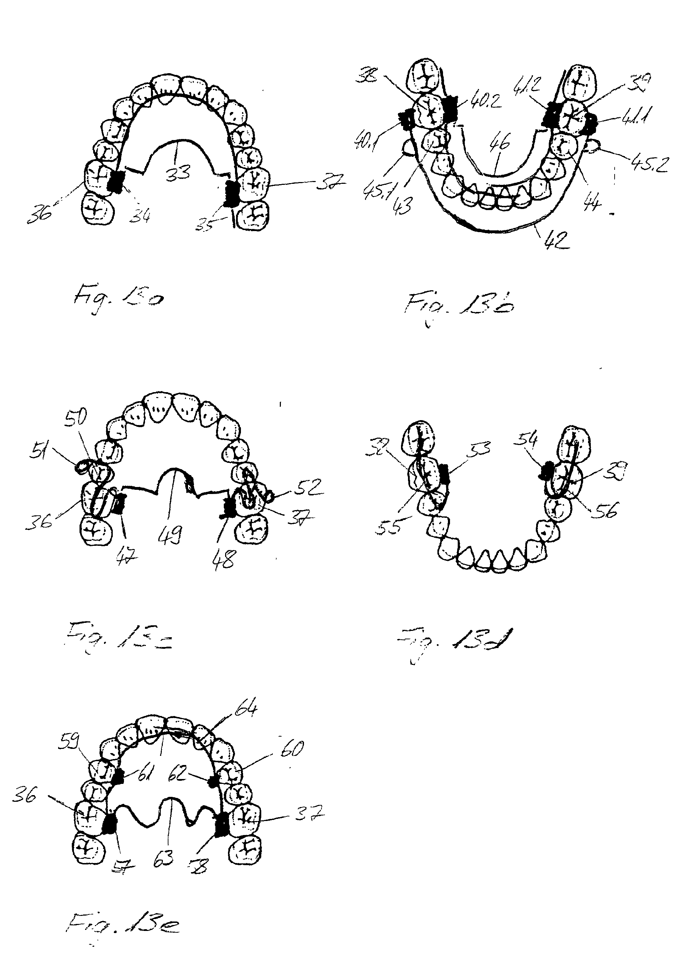

Einen Querschnitt durch einen Incisivus entlang der Schnittlinie A-A der Figur 8 wird in Figur 9 gezeigt. Der lingual angeordnete, erfindungsgemässe Aufbiss 84 ist bevorzugt ein Halbfabrikat. Die Tragschicht 85 besteht vorzugsweise aus einem harten Kunststoff, welcher an der den Zähnen zugeordneten Seite eine durch Druck verformbare zweite Schicht 86 aufweist. Der Aufbiss 84 wird im Mund des Patienten angepasst und anschliessend, beispielsweise durch Lichtpolymerisation gehärtet. In der Tragschicht 85 des Aufbisses 84 ist eine Bohrung 87 angeordnet, in welcher der Draht 83 hindurchgeführt wird. Durch diesen Draht 83 wird der Aufbiss 84 in der gewünschten Position gehalten.

Eine perspektivische Draufsicht auf einen Oberkiefer mit zwei erfindungsgemässen, okklusal angeordneten Aufbissen auf den Molaren und den hintersten Prämolaren stellt Figur 10 dar. Der Aufbiss 28 ist auf den Molaren 89.1, 89.2 und 89.3, sowie auf dem Prämolar 91 angeordnet. Der Aufbiss 88 verläuft vom hintersten Molar 90.1 bis und mit dem Prämolar 92. An dem Molaren 89.2 ist palatinal die erfindungsgemässe Vorrichtung 30 angeordnet. Infolge der Art der Darstellung ist die ebenso palatinal am Molar 90.2 angeordnete erfindungsgemässe Vorrichtung nicht erkennbar. Zwischen den Vorrichtungen verläuft ein Palatinalbogen 93. Jedes der eingesetzten Anschlusselemente ist mit mindestens zwei Öffnungen versehen, in welchen einerseits die Enden des Palatinalbogens 93 und die Befestigungselemente des Aufbisses 28 bzw. 88 fixiert werden können.

Bei den erfindungsgemässen Aufbissen 28 und 88 handelt es sich um Halbfabrikate, welche durch den Zahnarzt angepasst werden können. Es können so genannte Standardtypen des Halbfabrikats fabrikmässig für die häufigsten Anwendungen dem Zahnarzt zur Verfügung gestellt werden. Der Zahnarzt schneidet das Halbfabrikat in seinen Abmessungen bezogen auf den Einsatzort zurecht und kontrolliert das Zwischenprodukt direkt im Mund des Patienten. Die Aufbisse 28 und 88 bestehen vorzugsweise aus Kunststoff, wobei die der okklusalen Fläche des Zahns zugewandte Aufbissfläche 32 durch Druck verformbar ist. Nach dieser Anpassung härtet der Zahnarzt den Aufbiss 28 bzw. 88, beispielsweise durch Lichtpolymerisation oder Photopolymerisation aus. Somit kann in vielen Anwendungen auf Spezialanpassungen verzichtet werden, welche nur ein Zahntechniker erstellen kann. Dies wirkt sich insbesondere auf der Kostenseite positiv für den Patienten und die Krankenkassen aus. Neben den Vorteilen für die Zahnärzte sind die Halbfabrikate auch für die Zahntechniker vorteilhaft, da sich bei Massenprodukten die Einzelpreise gegenüber Einzelanfertigungen wesentlich reduzieren. Die Dauer für die einzelnen Arbeiten der Zahntechniker können reduziert werden, was zu einem höheren Gesamtausstoss der handwerklichen Produktion führt. Der Einsatzbereich von Halbfabrikaten ist nicht nur auf Anwendungen für Aufbisse beschränkt. Auch Drähte oder ganze Korrekturbögen können vorfabriziert und auf die spezielle Anwendung angepasst werden.

Figur 11 zeigt eine Ansicht eines Zahns mit der erfindungsgemässen Vorrichtung in Funktion eines Aufbisses. Der erfindungsgemässe Aufbiss 28 ist auf der okklusalen Fläche des Molars 25 angeordnet. Wie der Aufbiss 84 (siehe Fig. 9) umfasst auch der Aufbiss 28 eine Tragschicht 94, auf welcher in Richtung der Zahnfläche - hier Molar 25 - die zweite, verformbare Schicht 32 angeordnet ist. Mit einem Draht 29 ist der Aufbiss 28 über ein Anschlusselement 30 gehalten, welches in der bereits mehrmals beschriebenen Art und Weise im Clip 26 eingeschnappt ist. Zusätzlich kann der Aufbiss 28 durch eine zweite Vorrichtung 31 - hier als zusätzliche Variante gestrichelt dargestellt - gegen Verschiebungen gehalten sein, welche einen Clip 27, ein Anschlusselement 66 und einen Draht 67 umfasst. Die zusätzliche zweite Vorrichtung 31 muss nicht zwingend am gleichen Zahn gegenüber dem ersten Clip 26 befestigt werden. Die zweite Vorrichtung 31 kann auch an einem benachbarten Zahn, beispielsweise an einem Prämolar, befestigt sein. Weiter muss die zweite Vorrichtung 31 nicht zwingend an der Seite befestigt werden, welche der ersten Vorrichtung gegenüberliegt. Die Befestigung zweier Vorrichtungen kann somit lingual bzw. palatinal und/oder buccal angeordnet sein. An einem Molar 25 kann ein Clip (wie Clip 68, s. Fig. 4) befestigt werden, dass die Aufnahme des Clips okklusal ausgerichtet ist. Wenn zwei Clips - im Sinne von Clip 26 und 27 - angeordnet werden, kann ein, beziehungsweise auch beide Clips durch einen Clip mit einer okklusal ausgerichteten Aufnahme ersetzt werden. Die Wahl der Art des Clips ist durch den Einsatz und die vorhandenen Möglichkeiten bestimmt.

Die Darstellung in Figur 12 zeigt eine Ansicht eines Zahns mit der erfindungsgemässen Vorrichtung in Funktion eines Brackets. Die Vorrichtung 19 ist in diesem Beispiel buccal an einem Prämolar 20 angeordnet, was durch die schematische Darstellung der Lippe 21 verdeutlicht wird. Die Vorrichtung 19 umfasst den Clip 65 und ein Anschlusselement 22. Das Anschlusselement 22 weist einen Schlitz 23 auf, in welchem der Draht 24, beispielsweise ein Korrekturbogen, gehalten wird. Der Clip 65 ist an seiner Basis 66 mit einem adhäsiven Mittel, beispielsweise einem Haftmittel, am Prämolar 20 befestigt.

In den Figuren 13a bis 13e ist jeweils eine Draufsicht auf einen Kiefer mit verschiedenen Anwendungsbeispielen der erfindungsgemässen Vorrichtung gezeigt. Diese Anwendungsbeispiele dienen der Verdeutlichung der modularen Einsatzfähigkeit der erfindungsgemässen Vorrichtung und sind nicht abschliessend.

In der Figur 13a ist ein Oberkiefer gezeigt, in welchen ein Palatinalbogen 33 mit zwei erfindungsgemässen Vorrichtungen 34 und 35 gehalten ist. Die Vorrichtungen 34 und 35 sind palatinal an den Molaren 36 und 37 mit einem adhäsiven Mittel befestigt. Beispielsweise werden die Anschlusselemente für die Vorrichtungen 34 und 35 mit Bohrungen versehen, in welchen der Palatinalbogen 33 eingesetzt wird.

Figur 13b zeigt eine Kombination verschiedener Korrekturhilfen beispielhaft am Unterkiefer. An den Molaren 38 und 39 sind jeweils zwei erfindungsgemässe Vorrichtungen 40.1 und 40.2, beziehungsweise 41.1 und 41.2 lingual und buccal angeordnet. Die Vorrichtungen 40.1 und 41.1 halten einen Labialbogen 42. Am Labialbogen 42 sind zwei Aufbisse 45.1 und 45.2 seitlich an den Molaren 43 und 44 angeordnet. An den lingual angeordneten Vorrichtungen 40.2 und 41.2 ist ein Lingualbogen 46 befestigt.

In einem weiteren Ausführungsbeispiel an einem Oberkiefer sind jeweils an den Molaren 36 und 37 die Vorrichtungen 47 und 48 palatinal angeordnet (siehe Figur 13c). Die Öffnungen dieser Vorrichtungen 47 und 48 sind hier okklusal ausgerichtet. Die Anschlusselemente weisen jeweils zwei Befestigungsmöglichkeiten - beispielsweise Bohrungen - auf, in welchen ein Palatinalbogen 49 und für die Ausrichtung der Molare 50 und 37 buccal Aufbisse 51 und 52 angeordnet sind. Die okklusal ausgerichtete Öffnung des Clips erleichtert im Wesentlichen die Befestigung der Aufbisse 51 und 52. Trotzdem kann mit der erfindungsgemässen Vorrichtung auch der Palatinalbogen 49 gehalten werden.

In Figur 13d werden zwei lingual angeordnete Vorrichtungen 53 und 54 an einem Unterkiefer gezeigt, welche an den Molaren 38 und 39 befestigt sind. Die Clips der Vorrichtungen 53 und 54 weisen jeweils okklusal ausgerichtete Öffnungen auf, in welchen die okklusal angeordneten Aufbisse 55 und 56 gehalten werden. Die Aufbisse 55 und 56 werden vorzugsweise aus Halbfabrikaten hergestellt. Diese Halbfabrikate werden in ein paar wenigen Standardgrössen hergestellt und direkt durch den Zahnarzt in ihren Abmessungen im Mund des Patienten angepasst. In diesem Beispiel deckt der Aufbiss 55 alle Molaren auf der rechten Seite ab. Der Aufbiss 56 deckt nur die beiden hinteren Molaren auf der linken Seite des Unterkiefers ab. Gemäss dem Orientierungssystem zur dokumentarischen Darstellung der menschlichen Zähne gemäss der FDI (Federation Dentaire International) erfolgt die Darstellung der Zähne aus der Sicht des Betrachters - also auf das Gesicht des Patienten. Es ergibt sich daraus eine Seitenvertauschung Rechts-Links bei der Schreibweise.

Die erfindungsgemässen Aufbisse 55 und 56 werden durch den Zahnarzt im Mund des Patienten angepasst und von ihm selbst in der Zahnarztpraxis beispielsweise durch Lichtpolymerisation gehärtet. Anschliessend wird der Aufbiss 55 bzw. 56 mit dem Anschlusselement in der entsprechenden Vorrichtung 53 bzw. 54 eingeschnappt und somit gehalten. Der Zahnarzt kann direkt die Passform des Korrekturmittels kontrollieren und gegebenenfalls selbst noch leichte Anpassungen vornehmen.

Figur 13e zeigt eine weitere Anwendung der erfindungsgemässen Vorrichtung an einem Oberkiefer. An den Molaren 36 und 37 sind palatinal die Vorrichtungen 57 und 58 befestigt. An den Prämolaren 59 und 60 sind zwei weitere palatinal angeordnete Vorrichtungen 61 und 62 angebracht. An den Vorrichtungen 57 und 58 wird einerseits ein Palatinalbogen 63 und andererseits ein Innenbogen 64 befestigt, welcher von der Vorrichtung 57 über die Vorrichtungen 61 und 62 zu der Vorrichtung 58 verläuft. Damit können die Prämolare 59 und 60 entsprechend der gewünschten Wirkung korrigiert werden.

Das Drahtmaterial des Innenbogens 64 und/oder des Palatinalbogens 63 ist in dieser Ausführungsform ein so genannter Thermodraht. Der Thermodraht ist im Querschnitt wesentlich dünner ausgebildet als die herkömmlichen, in der Orthodontie verwendeten Querschnitte der Drähte. Der Thermodraht wird entsprechend den örtlichen Gegebenheiten und der Funktion des Drahtes beispielsweise am Gebiss des Patienten angepasst und ausserhalb der Mundhöhle beispielsweise elektrothermisch erwärmt. Nach der Abkühlung behält der Thermodraht seine, vor dem erwärmten Zustand hergestellte, Form bei. Auch wenn der abgekühlte Thermodraht gebogen oder gefaltet wird, nimmt er die zuvor ausgestaltete Form wieder an. Daneben sind Thermodrähte hoch belastbar. Somit können auch komplexere Ausgestaltungen erstellt werden, als es mit den herkömmlichen in der Orthodontie verwendeten Drähten möglich ist. Weiter ist die Verwendung von Thermodrähten bevorzugt, wenn ein entsprechend instruierter Patient das Mittel zur Korrektur selbst entfernen und wieder einsetzen kann.

Bei einer Korrekturhilfe mit einem Thermodraht werden die Clips der Vorrichtungen 57, 58, 61 und 62 beispielsweise an den Molaren 36 und 37 beziehungsweise an den Prämolaren 59 und 60 angebracht. Die Vorrichtungen 57, 58, 61 und 62 bestehen jeweils aus einem Clip und einem Anschlusselement. Die Anschlusselemente der Vorrichtungen 57 und 58 sind derart ausgebildet, dass sie einerseits eine Befestigungsmöglichkeit für den Palatinalbogen 63 und andererseits eine Befestigungsmöglichkeit für den Innenbogen 64 aufweisen. Die Anschlusselemente der Vorrichtungen 61 und 62 nehmen nur den Innenbogen 64 auf, weshalb sie vorzugsweise entsprechend ihrer Funktion und somit unterschiedlich gegenüber den Anschlusselementen der Vorrichtungen 57 und 58 ausgestaltet sind. So können diese Anschlusselemente der Vorrichtungen 61 und 62 nur eine Führungsfunktion für den Innenbogen 64 übernehmen, da der Innenbogen 64 mit den Anschlusselementen der Vorrichtungen 57 und 58 gehalten ist.

Die Anschlusselemente können in einer weiteren Ausführungsform mit Haken versehen sein an denen z. B. eine intermaxilläre Fixation (Verschnürung) zur zeitweiligen Verblockung des Unterkiefers mit dem Oberkiefer angebracht werden kann, beispielsweise mit der Multibandtechnik. Die Anschlusselemente werden dabei mit Drähten oder Gummizügen verbunden oder verschnürt.

In den Clip kann weiter ein Übertragungselement zum Reponieren im Abdruck eingesetzt werden. Vor der Abdrucknahme wird der Clip am Zahn des Patienten befestigt, das Übertragungselement in den Clip eingesetzt und der Abdruck vorgenommen. Anschliessend wird der Abdruck mit dem Übertragungselement an den Zahntechniker übergeben, welcher aufgrund des Abdrucks und der Position des Übertragungselements das Gipsmodell erstellt.

Weiter können auch Teilprothesen an einer erfindungsgemässen Vorrichtung fixiert werden. Insbesondere in einem teilbezahnten Kiefer, bei dem sich die Prothese an den verbliebenen Zähnen abstützt und so ein besseres Beissgefühl schafft, bietet sich diese Art der Befestigung an. Ein weiteres Anwendungsbeispiel findet sich bei den so genannten Brücken, welche einzelne fehlende Zähne ersetzen. Weiter können ein- und zweiarmige Klammern an den Anschlusselementen befestigt werden.

Zusammenfassend ist festzustellen, dass eine einfach anwendbare Vorrichtung geschaffen wurde, mit welcher die meisten Anwendungen der Orthodontie fixiert werden können. Neben Endprodukten können auch standardisierte Halbfabrikate verwendet werden, welche durch einen Zahnarzt direkt am Patienten angepasst werden können. Durch die erfindungsgemässe Vorrichtung lassen sich die Kosten für die Patienten und die Krankenkassen in der Orthodontie gegenüber den bisher bekannten Lösungen wesentlich reduzieren.

## Patentansprüche

1. Vorrichtung für die Orthodontie mit zumindest einem Mittel zur Korrektur, einem Anschlusselement (7, 8, 9) und einer Halterung (1), **dadurch gekennzeichnet, dass** das Mittel zur Korrektur am Anschlusselement (7, 8, 9) gehalten ist und dass das Anschlusselement (7, 8, 9) seinerseits an der Halterung (1) fixierbar ist.

2. Vorrichtung nach Anspruch 1, **dadurch gekennzeichnet, dass** das Anschlusselement (7, 8, 9) lösbar an der Halterung (1) fixierbar ist.

3. Vorrichtung nach einem der Ansprüche 1 oder 2, **dadurch gekennzeichnet, dass** das Anschlusselement (7, 8, 9) formschlüssig, vorzugsweise mit einer Klemmvorrichtung, an der Halterung (1) fixiert ist.

4. Vorrichtung nach einem der Ansprüche 1 bis 3, **dadurch gekennzeichnet, dass** die Halterung (1) U-förmig ist, wobei sie eine Basis (2) und zwei gegenüberliegende Seitenwände (3.1, 3.2) umfasst.

5. Vorrichtung nach einem der Ansprüche 1 bis 4, **dadurch gekennzeichnet, dass** zumindest eine der Seitenwände (3.1, 3.2) der Halterung (1) eine Ausbuchtung (4) und das Anschlusselement (7, 8, 9) zumindest ein mit dieser Ausbuchtung (4) zusammenwirkendes Mittel (12, 13) aufweist.

6. Vorrichtung nach einem der Ansprüche 1 bis 5, **dadurch gekennzeichnet, dass** die Halterung (1) zur direkten Befestigung an einem Zahn vorgesehen, bzw. ausgebildet ist.

7. Vorrichtung nach einem der Ansprüche 4 bis 6, **dadurch gekennzeichnet, dass** an der Basis (2) in Längsrichtung der Halterung (1) Laschen (6.1, 6.2) angeordnet sind.

8. Vorrichtung nach einem der Ansprüche 4 bis 7, **dadurch gekennzeichnet, dass** an der Basis (2) zumindest ein Hakenteil (5.1, 5.2) angeordnet ist, an welchem beispielsweise eine Verschnürung befestigbar ist.

9. Vorrichtung nach einem der Ansprüche 1 bis 8, **dadurch gekennzeichnet, dass** die Bestandteile der Vorrichtung aus Metall hergestellt sind.

10. Vorrichtung nach einem der Ansprüche 1 bis 9, **dadurch gekennzeichnet, dass** das Anschlusselement (7, 8, 9) zumindest eine Öffnung (10, 11) aufweist, in welcher ein Mittel zur Korrektur befestigbar ist.

11. Vorrichtung nach einem der Ansprüche 1 bis 10, **dadurch gekennzeichnet, dass** das Mittel zur Korrektur ein gebogener Draht (24) oder ein Aufbiss (28) ist.

12. Aufbiss, insbesondere für eine Vorrichtung nach Anspruch 1, **dadurch gekennzeichnet, dass** der Aufbiss zumindest zwei Schichten umfasst, wobei eine Schicht als Tragschicht und zumindest eine Schicht verformbar ist und nachträglich aushärtbar ist.

13. Verwendung eines Thermodrahts in der Orthodontie, insbesondere für eine Vorrichtung nach Anspruch 1.

14. Verwendung nach Anspruch 13, **dadurch gekennzeichnet, dass** der Thermodraht in einem Setup angepasst wird.
